# EUROPEAN PATENT SPECIFICATION

(11) **EP 4 065 935 B1**
(45) Date of publication and mention of the grant of the patent: **31.12.2025**
(21) Application number: 19816236.4
(22) Date of filing: 29.11.2019
(51) Int. Cl.: G01D 5/20

(54) **LINEAR MOTION SENSOR**
LINEARER BEWEGUNGSSENSOR
CAPTEUR DE MOUVEMENT LINÉAIRE

(43) Date of publication of application: 05.10.2022
(73) Proprietor: HELLA GmbH & Co. KGaA, 59552 Lippstadt (DE)
(72) Inventor: NOVAC, Adrian, Jud. Timis (RO); NYIREDI, Bogdan, Jud. Timis (RO); ROMAN, Stelian, Mun. Timisoara (RO)
(74) Representative: Behr-Wenning, Gregor
(86) International application number: PCT/EP2019/083062
(87) International publication number: WO 2021/104642

(56) References cited:
- WO-A1-2005/098370
- DE-A1- 19 738 836
- US-A1- 2008 054 887
- US-A1- 2017 302 273

## Description

The invention concerns a linear sensor with which a distance or a linear movement, in particular the speed of the linear movement, can be recorded.

Linear sensors for detecting distances or movements with a coil that generates an electromagnetic field that is disturbed by an electrically conductive element are known from the state of the art. Such a linear sensor is disclosed in document US 2017/302273 A1.

Also known are rotation sensors with a coil that generates an electromagnetic field that is disturbed by a rotor made of an electrically conductive material, whereby an angle or rotational movement can be detected. One application of such a sensor, for example, is disclosed in document US 2008/054887 A1. A further rotation sensor is disclosed in DE 199 41 464 A1. The sensor disclosed in DE 199 41 464 A1 has one excitation coil and several receiver coils. An oscillator circuit generates a periodic alternating voltage signal and couples it into the excitation coil. This generates a first electromagnetic field. In this field, a rotor is rotatably arranged as a coupling element. In this coupling element, an eddy current is generated by the first electromagnetic field, which in turn generates a second electromagnetic field. The fields overlap to form a resulting field that is coupled into the receiving coils and influences the voltages applied to the receiving coils. Depending on the angular position of the rotor, this results in a different resulting electromagnetic field. This field also changes as a function of any rotational movement of the rotor. This changes the voltage applied to the receiving coils as a function of the rotational position and movement of the rotor. The influence of the voltage applied to the receiving coils is detected by an evaluation circuit.

The sensor described in document DE 199 41 464 A1, including the evaluation circuit, has been produced in large quantities in recent years and has proven itself over the past 20 years. The evaluation circuit is usually implemented as an integrated circuit, in particular as an application-specific integrated circuit, ASIC.

The inventors now had the task of finding further fields of application for the sensor known from document DE 199 41 464 A1 with excitation coil, at least one receiver coil and a coupling element or a similar sensor, in particular for the evaluation circuit of the sensor.

This task is solved by a linear sensor with the features of claim 1. Accordingly, a linear sensor in accordance with the invention for detecting a distance or a linear movement has a first part with a first electromagnetic coil as excitation coil and with at least one second electromagnetic coil as receiver coil, which encloses a first surface, and a second part with an electrically conductive coupling element, into which an electromagnetic field generated by said excitation coil can be coupled, whereby eddy currents can be generated in said coupling element which generate an electromagnetic field which can be coupled into said at least one receiver coil to vary a voltage applied to said at least one receiver coil, said second part being linearly movable relative to said first part.

Components of the known rotation sensor can be used for the linear sensor according to the invention. But instead of detecting rotational movements or angles, the linear sensor is designed to detect distances and linear movements. In particular, it is possible that the evaluation circuit of the known or a similar rotation sensor is used for the inventive linear sensor, while other components are modified. In any case, the known or a similar rotation sensor must be modified so that a linear movement is possible instead of a rotary movement between the excitation coil and at least one receiving coil on the one hand and the coupling element on the other hand.

In addition to this fundamental difference to the well-known rotation sensor or a similar rotation sensor, further modifications are possible which serve to enable better, more accurate and/or simpler detection of the distance or linear motion.

A sensor according to the invention has two receiver coils electrically connected in series. These receiver coils electrically connected in series must be wound in the opposite direction. Each of the receiving coils has radial sections starting from a common centre and arcuate sections running on a circular line around the centre. The radial sections of the two receiving coils run parallel to each other or congruently, while in a first angular range the circular sections of one receiving coil run on an inner circular line around the centre and the circular sections of the other receiving coil run on an outer circular line around the centre. In angular ranges adjacent to this first angular range, the opposite is true: the arc-shaped sections of one receiving coil run on the outer circular line around the centre and the arc-shaped sections of the other receiving coil run on an inner circular line around the centre. The angular areas can have a width of 90°.

The receiver coils connected in series enclose the first surface. The first surface may, for example, be bounded by the outer circular line on which the radially outer arc-shaped sections of the two receiver coils are arranged.

The first part of the linear sensor may have a third electromagnetic coil as reference coil. The reference coil may include an area equal to or nearly equal to the first area. In addition, the receiver coils connected in series may be viewed together and the reference coil may have the same or almost the same magnetic flux.

The first part of a linear sensor according to the invention comprises a printed circuit board on which the excitation coil, at least one receiver coil and/or the reference coil are arranged. The coils can be provided as conductor tracks on the liner plate.

The coupling element of a linear sensor can be a closed conductor loop.

The second part of an invented linear sensor can comprise a printed circuit board on which the coupling element is arranged. The closed conductor loop can be designed as a conductor track on the printed circuit board.

It is possible that the coils or the closed conductor loop are stamped parts that have been die-cut from a sheet metal.

The linear sensor can have an integrated circuit to which the excitation coil and at least one receiver coil and, if applicable, the reference coil are electrically connected. The integrated circuit can have an evaluation circuit of the sensor according to the invention.

The coupling element of a linear sensor according to the invention is arranged in a plane parallel to the first surface and the second part is movable perpendicular to the first surface.

The invention is explained in more detail below on the basis of the attached drawings. The following shows
- Fig. 1: The routing of conductor tracks on a printed circuit board of a first part of a sensor according to the invention, whereby the conductor tracks form two receiver coils and a reference coil,
- Fig. 2: an electrical equivalent circuit diagram of the arrangement of the coils on the liner plate of the first part, and
- Fig. 3: the routing of the conductor track on a printed circuit board of a second part of a sensor according to invention.

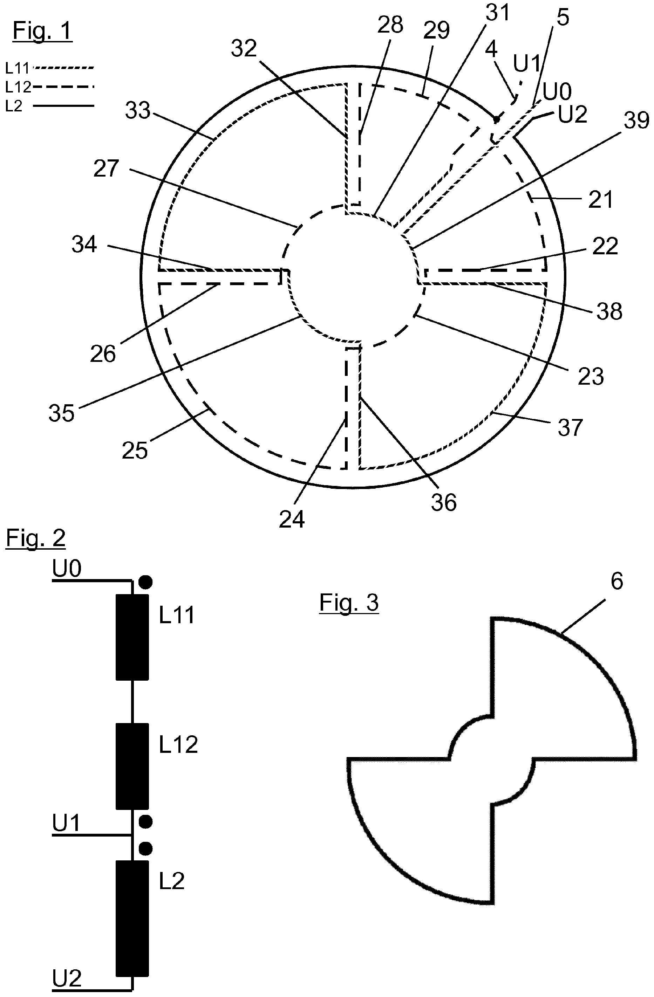

The routing of the conductor tracks 1, 2, 3 forming the receiver coils L11, L12 and the reference coils L2 on the printed circuit board of the first part and the routing of the closed conductor loop 6 on the printed circuit board of the second part as illustrated in Fig. 3 has turned out to be advantageous in experiments. The first and the second part of a sensor according to the invention are arranged in such a way that the circuit boards of a sensor according to the invention can be moved parallel to each other.

Together with an evaluation unit of the sensor from the document DE 199 41 464 A1 or a similar sensor it is possible to detect linear movements between the first and the second part or distances between the first and the second part of the sensor.

The first track 1 forming the reference coil lies on a circular path. The ends of this first track 1 are connected to connections which are also formed by tracks 4, 5 and which lead radially outwards. The first track 1 forming the reference coil encloses a first surface.

A second and a third track 2, 3 are arranged within the first track 1 to form the receiver coil. The second track 2 has a first end, which is connected to one of the tracks 4, to which the first track 1 is connected. This second track 2 has sections 21, 25, 29 running on an outer circular path, sections 23, 27 running on an inner circular path and radial sections 22, 24, 26, 28 connecting the sections running on the inner and outer circular paths. A second end of the second track 2 is connected to a first end of the third track 3 by a connecting track 4. The third track 3 also has sections 33, 37 running on an outer circular path, sections 31, 35, 39 running on an inner circular path and radial sections 32, 34, 36, 38 connecting the sections running on the inner and outer circular paths. A second end of the third conductor track 3 is connected to the evaluation unit via a connecting conductor track 5.

The sections of the second and third conductor paths running on the inner and outer circular paths each extend over an angle of approx. 90°. The outer sections run in close proximity to the first track 1 of the reference coil. The inner sections and the outer sections of the second and third tracks 2, 3 are alternating.

This design means that the second track 2 and the third track 3 are basically the same shape, but rotated 90° to each other. This makes it possible that the two tracks 2, 3 together enclose approximately the same area as the first track. Each of the two tracks 2, 3 encloses approximately the same area as the other of the tracks 2, 3.

In addition, the second and third conductor tracks are connected to each other via the connecting conductor track 4 in such a way that it is possible that the second and third conductor tracks or the receiver coils formed by these conductor tracks have a different winding direction, which is also shown in the equivalent circuit diagram (Fig. 2). A homogeneous magnetic flux through the area enclosed by the two conductor tracks 2, 3 therefore has a different effect in the receiver coils.

The closed conductor loop 6 of the coupling element, which is formed on the printed circuit board of the second part, is approximately congruent with each of the second and third conductor loops. However, it is approximately congruent with the second conductor loop. An electric eddy current and the electromagnetic field generated by the eddy current therefore have a different effect on the second conductor loop than on the third conductor loop. The electromagnetic field emitted by the coupling element therefore has a different effect on a voltage applied to the receiver coils. It has been found that at a decreasing distance between the first and second parts, a voltage applied to the receiver coil formed by the second conductor loop 2 decreases at a decreasing distance, while at the same time a voltage applied to the receiver coil formed by the third conductor loop 3 increases. If the distance between the first and the second part increases, the reverse occurs. The voltage in one receiver coil does not decrease to the same extent as the voltage in the other receiver coil increases. The sum of the voltage dropping across both receiver coils is therefore not constant if the distance between the first and second part changes.

The arrangement of the first part and the second part can be designed in such a way that the voltage across the two receiver coils is 0 Volt in an initial position. If the distance is subsequently reduced, it increases to a value of 1 Volt, which can be evaluated by the evaluation unit and converted into a signal indicating the distance.

The coupling element and the change in the electromagnetic field caused by the closed conductor loop 6 of the coupling element, which is generated by an excitation coil that is not shown, has only an influence on the receiver coils, but not on the electromagnetic field, which permeates the first surface as a whole and thus the reference coil with the first conductor path 1. A voltage at the reference coil remains without change if the first and the second part are moved to each other.

For example, the excitation coil can be excited with an alternating voltage at a frequency of 3 to 4 MHz to generate the electromagnetic field.

### Reference signs

- 1: first conductor track forming reference coil
- 2: second conductor track forming a receiver coil
- 21, 25, 29: sections running on an outer circular path
- 22, 24, 26, 28: radial sections
- 23, 27: sections running on an inner circular path
- 3: third conductor track forming a receiver coil
- 31, 35, 39: sections running on an inner circular path
- 32, 34, 36, 38: radial sections
- 33, 37: sections running on an outer circular path
- 4: connection formed by conductor track
- 5: connection formed by conductor track
- 6: closed conductor loop of the coupling element
- L11: receiver coil
- L12: receiver coil
- L3: reference coil

## Claims

1. A linear sensor for detecting a distance or a linear movement, the linear sensor comprising
- a first part
- having a first electromagnetic coil as excitation coil and
- having two second electromagnetic coils (L11, L12) as receiver coil that encloses a first surface,
- whereby the two second electromagnetic coils (L11, L12) are electrically connected in series and wound in opposite directions,
- whereby the first part comprises a printed circuit board on which the excitation coil and the two receiver coils (L11, L12) are arranged,
- whereby each of the second electromagnetic coils (L11, L12) has radial sections starting from a common centre and circular sections running on a circular line around the centre, whereby the radial sections of the two second electromagnetic coils (L11, L12) run parallel to each other,
- while in a first angular range the circular sections (23, 27) of one electromagnetic coil (L12) runs on an inner circular line around the centre and the circular sections (33, 37) of the other electromagnetic coil (L11) runs on an outer circular line around the centre,
- while in a second angular range, which is adjacent to the first angular range, the circular sections (21, 25, 29) of one electromagnetic coil (L12) run on the outer circular line around the centre and the circular sections (31, 35, 39) of the other electromagnetic coil (L11) run on an inner circular line around the centre,
- a second part
- having an electrically conductive coupling element,
- into which an electromagnetic field generated by the excitation coil can be coupled,
- whereby the coupling element is arranged in a plane parallel to the first surface,
- whereby eddy currents can be generated in the coupling element which generate an electromagnetic field
- which can be coupled into the receiver coil (L11, L12) in order to change a voltage applied to the receiver coil,
- the second part being linearly movable relative to the first part
**characterized in that**
- the second part is movable perpendicular to the first surface and the sensor is configured for detecting a distance or a linear movement of the second part perpendicular to the first surface.

2. Linear sensor according to claim 1, **characterized in that** the first part comprises a third electromagnetic coil as reference coil (L2).

3. Linear sensor according to claim 2, **characterized in that** the reference coil (L2) includes an area which corresponds or nearly corresponds to the first surface, and the receiver coil (L11, L12) connected in series and the reference coil (L2) are permeated by the same or nearly the same magnetic flux.

4. Linear sensor according to one of claims 1 to 3, **characterized in that** the coupling element is a closed conductor loop (6).

5. Linear sensor according to one of claims 1 to 4, **characterized in that** the second part comprises a printed circuit board on which the coupling element is arranged.

6. Linear sensor according to one of claims 1 to 5 **characterized in that** the linear sensor comprises an integrated circuit to which the excitation coil and the receiver coil (L11, L12) and optionally the reference coil (L2) are electrically connected.

## Patentansprüche

1. Linearsensor zum Detektieren einer Entfernung oder einer Linearbewegung, wobei der Linearsensor Folgendes umfasst:
- ein erstes Teil,
- das eine erste elektromagnetische Spule als Erregerspule aufweist, und
- das zwei zweite elektromagnetische Spulen (L11, L12) als Empfängerspule aufweist, die eine erste Oberfläche umschließt,
- wobei die zwei zweiten elektromagnetischen Spulen (L11, L12) in Reihe elektrisch verbunden und in entgegengesetzten Richtungen gewickelt sind,
- wobei das erste Teil eine Leiterplatte, auf welcher die Erregerspule und die zwei Empfängerspulen (L11, L12) angeordnet sind, umfasst,
- wobei jede von den zweiten elektromagnetischen Spulen (L11, L12) radiale Abschnitte, die von einem gemeinsamen Zentrum beginnen, und runde Abschnitte, die auf einer runden Linie um das Zentrum verlaufen, aufweist, wobei die radialen Abschnitte der zwei zweiten elektromagnetischen Spulen (L11, L12) parallel zueinander verlaufen,
- während in einem ersten Winkelbereich die runden Abschnitte (23, 27) einer elektromagnetischen Spule (L12) auf einer inneren runden Linie um das Zentrum verlaufen und die runden Abschnitte (33, 37) der anderen elektromagnetischen Spule (L11) auf einer äußeren runden Linie um das Zentrum verlaufen,
- während in einem zweiten Winkelbereich, der dem ersten Winkelbereich benachbart ist, die runden Abschnitte (21, 25, 29) einer elektromagnetischen Spule (L12) auf der äußeren runden Linie um das Zentrum verlaufen und die runden Abschnitte (31, 35, 39) der anderen elektromagnetischen Spule (L11) auf einer inneren runden Linie um das Zentrum verlaufen,
- ein zweites Teil,
- das ein elektrisch leitfähiges Kopplungselement aufweist,
- in das ein elektromagnetisches Feld, erzeugt durch die Erregerspule, eingekoppelt werden kann,
- wobei das Kopplungselement in einer Ebene parallel zur ersten Oberfläche angeordnet ist,
- wobei in dem Kopplungselement Wirbelströme erzeugt werden können, die ein elektromagnetisches Feld erzeugen,
- das in die Empfängerspule (L11, L12) eingekoppelt werden kann, um eine an die Empfängerspule angelegte Spannung zu verändern,
- wobei das zweite Teil relativ zum ersten Teil linear beweglich ist,
**dadurch gekennzeichnet, dass**
- das zweite Teil senkrecht zur ersten Oberfläche bewegbar ist und der Sensor zum Detektieren einer Entfernung oder einer Linearbewegung des zweiten Teils senkrecht zur ersten Oberfläche konfiguriert ist.

2. Linearsensor nach Anspruch 1, **dadurch gekennzeichnet, dass** das erste Teil eine dritte elektromagnetische Spule als Referenzspule (L2) umfasst.

3. Linearsensor nach Anspruch 2, **dadurch gekennzeichnet, dass** die Referenzspule (L2) einen Bereich umfasst, welcher der ersten Oberfläche entspricht oder annähernd entspricht,
und die in Reihe angeschlossene Empfängerspule (L11, L12) und die Referenzspule (L2) von dem gleichen oder annähernd dem gleichen Magnetfluss durchdrungen werden.

4. Linearsensor nach einem der Ansprüche 1 bis 3, **dadurch gekennzeichnet, dass** das Kopplungselement eine geschlossene Leiterschleife (6) ist.

5. Linearsensor nach einem der Ansprüche 1 bis 4, **dadurch gekennzeichnet, dass** das zweite Teil eine Leiterplatte umfasst, auf der das Kopplungselement angeordnet ist.

6. Linearsensor nach einem der Ansprüche 1 bis 5, **dadurch gekennzeichnet, dass** der Linearsensor eine integrierte Schaltung umfasst, mit der die Erregerspule und die Empfängerspule (L11, L12) sowie optional die Referenzspule (L2) elektrisch verbunden sind.

## Revendications

1. Un capteur linéaire pour détecter une distance ou un mouvement linéaire, le capteur linéaire comprenant
- une première partie
- comportant une première bobine électromagnétique comme bobine d'excitation et
- deux secondes bobines électromagnétiques **(L11,** L12) comme bobines réceptrices qui entourent une première surface,
- les deux secondes bobines électromagnétiques **(L11,** L12) étant connectées électriquement en série et enroulées dans des directions opposées,
- la première partie comprenant une carte de circuit imprimé sur laquelle sont disposées la bobine d'excitation et les deux bobines réceptrices (L11, L12),
- chacune des secondes bobines électromagnétiques (L11, L12) présentant des sections radiales partant d'un centre commun et des sections circulaires s'étendant sur une ligne circulaire autour du centre, les sections radiales des deux secondes bobines électromagnétiques (L11, L12) s'étendant parallèlement l'une à l'autre,
- tandis que, dans une première plage angulaire, les sections circulaires (23, 27) d'une bobine électromagnétique (L12) s'étendent sur une ligne circulaire intérieure autour du centre et les sections circulaires (33, 37) de l'autre bobine électromagnétique **(L11)** s'étendent sur une ligne circulaire extérieure autour du centre,
- tandis que, dans une deuxième plage angulaire adjacente à la première plage angulaire, les sections circulaires (21, 25, 29) d'une bobine électromagnétique (L12) s'étendent sur la ligne circulaire extérieure autour du centre et les sections circulaires (31, 35, 39) de l'autre bobine électromagnétique **(L11)** s'étendent sur une ligne circulaire intérieure autour du centre,
- une deuxième partie
- comportant un élément de couplage électriquement conducteur
- dans lequel un champ électromagnétique généré par la bobine d'excitation peut être couplé,
- l'élément de couplage étant disposé dans un plan parallèle à la première surface,
- des courants de Foucault pouvant être générés dans l'élément de couplage et générant ainsi un champ électromagnétique
- qui peut être couplé dans la bobine réceptrice (L11, L12) afin de modifier une tension appliquée à la bobine réceptrice,
- la deuxième partie étant mobile linéairement par rapport à la première partie
**caractérisé en ce que**
- la deuxième partie est mobile perpendiculairement à la première surface et **en ce que** le capteur est configuré pour détecter une distance ou un mouvement linéaire de la deuxième partie perpendiculairement à la première surface.

2. Capteur linéaire selon la revendication 1 **caractérisé en ce que** la première partie comprend une troisième bobine électromagnétique comme bobine de référence (L2).

3. Capteur linéaire selon la revendication 2 **caractérisé en ce que** la bobine de référence (L2) comprend une zone qui correspond ou correspond presque à la première surface,
et **en ce que** la bobine réceptrice (L11, L12) connectée en série et la bobine de référence (L2) sont traversées par le même ou presque le même flux magnétique.

4. Capteur linéaire selon l'une des revendications 1 à 3 **caractérisé en ce que** l'élément de couplage est une boucle conductrice fermée (6).

5. Capteur linéaire selon l'une des revendications 1 à 4 **caractérisé en ce que** la deuxième partie comprend une carte de circuit imprimé sur laquelle est disposé l'élément de couplage.

6. Capteur linéaire selon l'une des revendications 1 à 5 **caractérisé en ce que** le capteur linéaire comprend un circuit intégré auquel sont connectées électriquement la bobine d'excitation et la bobine réceptrice (L11, L12), ainsi que en option, la bobine de référence (L2).
